# EUROPÄISCHE PATENTANMELDUNG

(11) **EP 2 065 657 A1**
(43) Veröffentlichungstag der Anmeldung: **03.06.2009**
(21) Anmeldenummer: 07023025.5
(22) Anmeldetag: 28.11.2007
(51) Int. Cl.: F24H 3/04, F24H 9/00, B23K 1/012

(54) **Heissluftgerät mit austauschbarer Heissluftdüse**

(71) Anmelder: Leister Process Technologies, 6056 Kägiswil (CH)
(72) Erfinder: Di Miceli, Giuseppe, 5737 Menzikon (CH); Wallimann-Durrer, Leo, 6053 Alpnachstad (CH); Arnold, Hans, 6055 Alpnach (CH); Niederberger, Adolf, 6056 Kägiswil (CH)
(74) Vertreter: Klocke, Peter

(57) **Zusammenfassung**

Die Erfindung betriff ein Heißluftgerät (1) mit einem Gehäuse (2), mit einem Luftaustrittsrohr (4) für Heißluft und mit einem Schutzrohr (6), das das Luftaustrittsrohr (6) mit Abstand übergreifend am Gehäuse (2) angeordnet ist. Dabei ist das Schutzrohr (6) lösbar mit dem Gehäuse (2) über eine Schraubverbindung verbunden und an dem Luftaustrittsrohr (4) des Gehäuses (2) eine Heißluftdüse (5) mittels einer Befestigungseinrichtung auswechselbar befestigbar. Die vorgesehene Heißluftdüse (5) weist einen rohrartigen Befestigungsflansch (8) an einem Ende und ein Düsenrohr (9) zur Ausgabe von Heißluft am anderen Ende auf. Dabei wird als Befestigungseinrichtung für die Heißluftdüse (5) an dem Gehäuse (2) das Schutzrohr (6) verwendet, an dem die Heißluftdüse (5) an einem vorderen Ende (14) lösbar und damit auswechselbar befestigt ist.

## Beschreibung

Die Erfindung betrifft ein Heißluftgerät mit einem Gehäuse, an dem ein Luftaustrittsrohr angeordnet ist, an dem mit einer Befestigungseinrichtung eine Heißluftdüse mittels eines rohrartigen Befestigungsflansches auswechselbar befestigbar ist, wobei das Luftaustrittsrohr von einem Schutzrohr, das ebenfalls mit dem Gehäuse verbunden ist, mit Abstand umgeben ist. Die Erfindung betrifft außerdem einen Befestigungsflansch für eine Heißluftdüse zur Befestigung an dem Heißluftgerät sowie eine Heißluftdüse mit einem derartigen Befestigungsflansch zum Gebrauch mit dem Heißluftgerät.

Heißluftgeräte der Eingangs genannten Art, welche beispielsweise mittels einem von einer Gebläseeinrichtung erzeugten und einer nachgelagerten Heizeinrichtung erhitzten Luftstroms Kunststoffteile schrumpfen oder verschweißen bzw. Kupferteile miteinander verlöten, sind an sich in den verschiedensten Ausführungsformen seit vielen Jahren bekannt. Zur Erhöhung der Strömungsgeschwindigkeit der aus dem Luftaustrittsrohr austretenden Heißluft ist es üblich, an der Luftaustrittsöffnung des Luftaustrittsrohres eine Heißluftdüse vorzusehen. Mit der Heißluftdüse kann die Richtung und der Querschnitt des Luftstromes individuell für unterschiedliche Anwendungszwecke eingestellt werden.

Bekannte Heißluftdüsen weisen meist einen rohrartigen Befestigungsflansch zur Befestigung an dem Heißluftgerät sowie ein Düsenrohr zur Ausgabe von Heißluft auf. Zur Befestigung wird eine solche Heißluftdüse mit dem Befestigungsflansch auf das dem Gehäuse ferne Ende des Luftaustrittsrohres aufgeschoben und mit einer vorzugsweise an dem Befestigungsflansch angeformten Befestigungsschelle klemmend gesichert. Dabei erfolgt die Abdichtung zwischen der Heißluftdüse und dem Luftaustrittsrohr vorwiegend am Umfang, wobei zur Optimierung der Abdichtung der Überlappungsbereich das Luftaustrittsrohrs und die Heißluftdüse häufig konisch ausgebildet sind.

Als nachteilig wird bei solchen Ausführungsformen angesehen, dass die Montage und Demontage der Heißluftdüse aufwändig ist und die Schraube der Befestigungsschelle verloren gehen kann. Des weiteren kann die Demontage der Heißluftdüse mühsam sein, wenn im heißen Zustand des Luftaustrittsrohrs die Heißluftdüse verklemmt. Es besteht immer die Gefahr, dass ein Benutzer sich die Hand verbrennt, wenn er zum Düsenwechsel die heiße Düse anfasst. Außerdem kann Heißluft durch Schlitze am Befestigungsflansch der Düse entweichen oder die Düse durch Überdruck von dem Luftaustrittsrohr abfallen, wenn die Heißluftdüse nicht vollständig auf das Luftaustrittsrohr aufgeschoben oder die Klemmung mittels der Schraube nicht korrekt erfolgt ist.

Ausgehend von einem derartigen Heißluftgerät liegt der Erfindung die Aufgabe zugrunde, ein Heißluftgerät und eine Heißluftdüse vorzuschlagen, bei der ein leichter und sicherer Wechsel zwischen mehreren Heißluftdüsen möglich und die Abdichtung verbessert ist.

Diese Aufgabe wird erfindungsgemäß durch ein Heißluftgerät mit den Merkmalen des Anspruchs 1, einen Befestigungsflansch gemäß Anspruch 7 und eine Heißluftdüse mit den Merkmalen des Anspruchs 11 gelöst. Weitere vorteilhafte Ausgestaltungen sind den jeweiligen rückbezogenen Unteransprüchen zu entnehmen.

Gemäß der Erfindung wird die Befestigungseinrichtung, mit der die Heißluftdüse an dem Luftaustrittsrohr auswechselbar befestigbar ist, von dem Schutzrohr des Heißluftgerätes gebildet. Dies erlaubt eine andere Befestigung der Heißluftdüse bei gleichzeitig verbesserter Luftabdichtung. Ein Vorteil besteht auch darin, dass das Schutzrohr gegenüber dem Luftaustrittsrohr eine niedrigere Temperatur aufweist, so dass beim Wechsel keine Verbrennungen entstehen können. Dies führt zu einer weiteren Vereinfachung der Handhabung des erfindungsgemäßen Heißluftgerätes.

Das Schutzrohr ist vorteilhafterweise mittels geeigneter Befestigungseinrichtungen lösbar mit dem Gehäuse verbunden und weist vorzugsweise an seinem hinteren Ende ein Umfangsgewinde zum Verschrauben mit dem Gehäuse des Heißluftgeräts auf. Das Gewinde kann an einem inneren oder äußeren Umfang des Schutzrohres angeordnet sein, wobei ein zugeordnetes Außen- bzw. Innengewinde am Gehäuse des Heißluftgerätes entsprechend komplementär ausgebildet ist. Das Verschrauben des Schutzrohres mit dem Gehäuse des Heißluftgerätes erfolgt durch Drehen des Schutzrohrs um seine Längsachse, wobei das Schutzrohr im verschraubten Zustand das Luftaustrittsrohr nicht berührt. Dabei kann das Gewinde an dem Schutzrohr und an dem Gehäuse durchgehende oder unterbrochene Gewindegänge aufweisen oder nach Art einer Bajonettverriegelung ausgebildet sein.

Zweckmäßigerweise ist das Schutzrohr, das Luftaustrittsrohr in einem wesentlichen Teil seiner Länge mit Abstand übergreifend, mit dem Gehäuse des Heißluftgerätes verbunden. Es kann von dem Gehäuse ganz oder teilweise entfernt und wieder an diesem befestigt werden. Dies ermöglicht auf einfache Weise die Heißluftdüse mittels dem Schutzrohr an das Luftaustrittsrohr dichtend anzupressen oder von diesem zu lösen.

In einer bevorzugten Ausbildung des vorgeschlagenen Heißluftgerätes ist die Heißluftdüse mit dem vorderen Ende des Schutzrohres lösbar verbunden. Dabei ist die Heißluftdüse mit dem rohrartigen Befestigungsflansch, der dem Luftaustrittsrohrs zugewandt an der Düse vorgesehen ist, an dem Gehäuse abgewandten Ende des Schutzrohres befestigt und vorzugsweise verriegelt. Die Verbindung ist ohne großen Kraftaufwand und ohne Hilfswerkzeug schnell und sicher herstell- und lösbar. Dazu sind an dem Befestigungsflansch und an dem vorderen Ende des Schutzrohres entsprechende Befestigungsmittel vorgesehen.

Bevorzugt wird eine Ausführungsform der Erfindung, bei der das Schutzrohr an seinem vorderen Ende einen Ringbund an seinem Innenumfang aufweist. Mit dem Ringbund wird die Heißluftdüse beim Festdrehen des Schutzrohres an dem Heißluftgerät in Richtung des Gehäuses bewegt, bis die Heißluftdüse an der Stirnseite des Luftaustrittsrohrs anliegt. Außerdem ist an einem stromaufwärtigen Ende des Befestigungsflansches der Heißluftdüse ein Ringsteg am Außenumfang angeordnet, der an dem Ringbund auf der dem Gehäuse zugewandten Seite in Anlage bringbar ist. Der Ringsteg bildet einen Hinterschnitt für den Ringbund und überträgt die Zugkräfte des Schutzrohres beim Anziehen auf die Heißluftdüse. Damit wird beim Drehen des Schutzrohres die Heißluftdüse durch das Gewinde des Schutzrohres so lange in Richtung des Luftaustrittsrohres bewegt, bis die anfangs noch lose Düse an dem Luftaustrittsrohr anliegt. Dabei kann die Anlage an einer Stirnfläche oder an einer konischen Umfangsfläche des Luftaustrittsrohres abhängig davon erfolgen, wie die Heißluftdüse und das Luftaustrittsrohr im Überlappungsbereich ausgebildet sind.

In einer vorteilhaften Ausführungsform des erfindungsgemäßen Handschweißgerätes sind der Ringbund und der Ringsteg unterbrochen. Dies ermöglicht ein axiales Einführen des stromaufwärtigen Endes der Heißluftdüse in das vordere stromabwärtige Ende des Schutzrohres in mindestens einer bestimmten Ausrichtung zueinander. Durch Drehen der Heißluftdüse relativ gegenüber dem Schutzrohr werden die vorstehenden Abschnitte des Ringsteges bzw. des Ringbundes im Umfangsrichtung gegeneinander verschoben und dadurch mindestens teilweise zur Deckung und in Anlage aneinander gebracht. Es hat sich als zweckmäßig herausgestellt, die Heißluftdüse in einer solchen Stellung mit der Schutzrohr zu verriegeln. Prinzipiell ist es bei einer solchen Ausführung auch möglich, den unterbrochenen Ringbund an dem Außenumfang des Schutzrohres und den ebenfalls unterbrochenen Ringsteg an dem Innenumfang der Heißluftdüse vorzusehen. Dabei kann an dem Schutzrohr ein zweiter, dem unterbrochenen Ringbund in Strömungsrichtung vorgelagerter Ringbund als axialer Anschlag für die Heißluftdüse angeordnet sein.

Vorzugsweise ist die Heißluftdüse durch Drehen des Schutzrohres an das Luftaustrittsrohr stirnseitig anpressbar. Die stirnseitige Abdichtung hat den Vorteil, dass ein radiales Spiel zwischen dem Befestigungsflansch und dem Luftaustrittsrohr vorgesehen werden kann, um ein Festklemmen der Heißluftdüse auf dem Luftaustrittsrohr zu verhindern. Trotz einem sich entlang dem Umfang erstreckenden Luftspalt kann dort keine Heißluft ungewünscht entweichen.

Zusammenfassend ausgedrückt, werden bei dem erfindungsgemäßen Heißluftgerät die unterschiedlichen Heißluftdüsen mit einer Art Drehverschluss an dem Schutzrohr und auf dem Luftaustrittsrohr befestigt. Abhängig von der Drehrichtung des Schutzrohres wird die Heißluftdüse an das Luftaustrittsrohr angepresst oder von diesen gelöst. Für das Anbringen und/oder Entfernen der Heißluftdüse von dem Heißluftgerät wird kein Werkzeug benötigt. Trotzdem wird auf einfache Weise eine dichte formschlüssige Arretierung durch die Drehbewegung des Schutzrohres erreicht. Ebenso wird bei der Demontage die Heißluftdüse durch Drehen des Schutzrohrs einfach von der Luftaustrittsöffnung des Luftsaustrittsrohrs getrennt. Des weiteren lässt sich die Heißluftdüse nach Betrieb bei hohen Temperaturen nicht ohne weiteres von dem Luftaustrittsrohr lösen. Bedingt durch die unterschiedliche Wärmeausdehnung der Heißluftdüse und des Luftaustrittsrohrs klemmt die Heißluftdüse auf dem Luftaustrittsrohr und kann nicht sofort durch Drehen des Schutzrohrs entfernt werden. Das im Schutzrohr einliegende heiße Luftaustrittsrohr muss sich zuerst abkühlen. Durch diese kurze Wartezeit kühlt sich die Heißluftdüse ebenfalls soweit ab, dass die Verbrennungsgefahr des Benutzer beim Herausnehmen der Düse aus dem Schutzrohr reduziert ist. Durch die axiale Ausdehnung des Luftaustrittsrohrs bei Erwärmung im Betriebszustand wird der Anpressdruck des Befestigungsflansches der Heißluftdüse gegenüber dem Luftaustrittsrohr zusätzlich verstärkt und damit die Abdichtung verbessert. Außerdem kann die Düse nicht mehr von dem Luftaustrittsrohr des Heißluftgerätes abfallen, da sie von dem Schutzrohr gehalten ist.

Gemäß der Erfindung weist der Befestigungsflansch für die Heißluftdüse zur Verwendung mit dem vorstehend vorgeschlagenen Heißluftgerät bzw. die Heißluftdüse Befestigungsmittel an dem dem Luftaustrittsrohr zugewandten Ende des Befestigungsflansches auf, die mit dem Schutzrohr derart zusammenwirken, dass die Heißluftdüse durch Drehen des Schutzrohrs, abhängig von der Drehrichtung, an das Luftaustrittsrohr anpressbar oder von diesem lösbar ist. Dabei sind die Befestigungsmittel an einem rohrartigen Befestigungsflansch der Düse vorgesehen, der luftstromabwärts nachgelagert ein Düsenrohr zur gerichteten Ausgabe von Heißluft aufweist.

In einer vorteilhaften Ausführungsform der erfindungsgemäßen Heißluftdüse sind die Befestigungsmittel an einem Außen- oder Innenumfang des Befestigungsflansches angeordnet und stehen vorzugsweise über den Umfang des Befestigungsflansches vor. Bevorzugt wird eine Ausführungsform, bei der die Befestigungsmittel von dem Außenumfang seitlich abstehen.

Der Befestigungsflansch kann allein in Form eines Adapters zur Anbringung bereits bestehende Heißluftdüsen oder gleich direkt an der Heißluftdüse befestigt sein.

Nachfolgend wird die Erfindung anhand eines Ausführungsbeispiels näher erläutert. Weitere Merkmale der Erfindung ergeben sich aus den beigefügten Zeichnungen und der Beschreibung des Ausführungsbeispiels in Verbindung mit den Ansprüchen. Die einzelnen Merkmale der Erfindung können für sich allein oder zu mehreren bei unterschiedlichen Ausführungsformen der Erfindung realisiert sein. In einer schematischen Abbildung zeigen:
- Figur 1: ein erfindungsgemäßes Heißluftgerät in einer Längsschnittdarstellung;

- Figur 2: das Schutzrohr aus Figur 1 mit aufgesetzter Heißluftdüse in perspektivischer Ansicht; und
- Figur 3: das Schutzrohr aus Figur 2 mit entfernter Heißluftdüse.

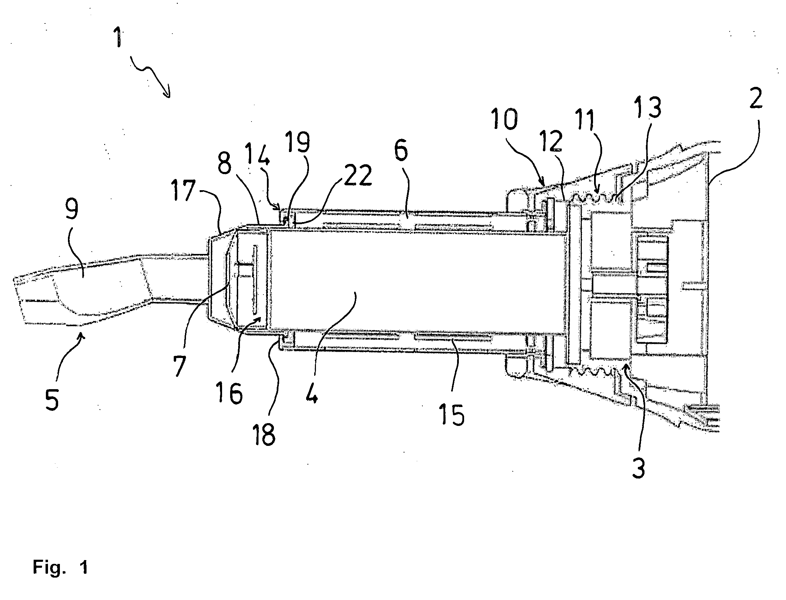

Figur 1 zeigt ein erfindungsgemäßes Heißluftgerät 1 mit einem Gehäuse 2, das in der Zeichnung nur teilweise dargestellt ist. Aus einer dargestellten Vorderseite 3 des Gehäuses 2 erstreckt sich ein Luftaustrittsrohr 4, an das eine Heißluftdüse 5 luftstromabwärts anschließt. Die Heißluftdüse 5 ist an einem Schutzrohr 6 befestigt, das die Heißluftdüse 5 stirnseitig an eine Luftaustrittsöffnung 7 des Luftaustrittsrohrs 4 dichtend anpresst. Dazu weist die Heißluftdüse 5 einen rohrartigen Befestigungsflansch 8 auf, an dem stirnseitig nachfolgend ein Düsenrohr 9 zur Ausgabe von Heißluft angeordnet ist.

Für die Erzeugung der Heißluft sind in dem in der Zeichnung nicht dargestellten Teil des Gehäuses 2 eine Lufterzeugungseinrichtung sowie im Luftaustrittsrohr 4 eine Lufterhitzungseinrichtung untergebracht. Der damit erzeugte Heißluftstrom wird durch das Luftaustrittsrohr 4 mit Überdruck der Heißluftdüse 5 zugeleitet und tritt über das Düsenrohr 9 aus dem Heißluftgerät 1 aus. Das Schutzrohr 6 übergreift das Luftaustrittsrohr 4 über einen großen Teil seiner Länge und ist mit der Vorderseite 3 des Gehäuses 2 mit Abstand zum Luftaustrittsrohr 4 lösbar verbunden. Dazu weist das Schutzrohr 6 an seinem hinteren Ende 10 ein Gewinde 11 an einem Innenumfang 12 auf, das mit einem korrespondierenden Außengewinde 13 an der Vorderseite 3 des Gehäuses 2 in Eingriff ist. Durch Zusammenwirken der Gewinde 11, 13 kann das Schutzrohr 6, abhängig von der Drehrichtung, zu dem Gehäuse 2 hin oder von dem Gehäuse 2 weg bewegt werden. Durch Abdrehen des Schutzrohres 6 kann die Heißluftdüse 5, die an dem vorderen Ende 14 des Schutzrohres 6 lösbar befestigt ist, zusammen mit dem Schutzrohr 6 einfach und ohne Werkzeug von dem Heißluftgerät 1 abgenommen werden.

Das Schutzrohr 6 weist eine Anzahl von Lüftungsschlitzen 15 auf, die über den Umfang 12 des Schutzrohrs 6 gleichmäßig verteilt sind. Sie dienen zur Kühlung des Schutzrohres 6 mittels einem, von der in der Zeichnung nicht dargestellten Lufterzeugungseinrichtung abgezweigten kalten Luftstrom, der durch einen Luftspalt zwischen dem Luftaustrittsrohr 4 und dem Schutzrohr 6 beim Betrieb des Heißluftgeräts 1 geleitet wird. Die Heißluftdüse 5 übergreift im Gebrauchszustand das vordere Ende 16 des Luftaustrittsrohrs 4 mit dem Befestigungsflansch 8, wobei der Befestigungsflansch 8 einen sich konisch verjüngenden Flanschbereich 17 aufweist, der stirnseitig an dem vorderen, die Luftaustrittsöffnung 7 aufweisenden Ende 16 des Luftaustrittsrohrs 4 in Anlage ist.

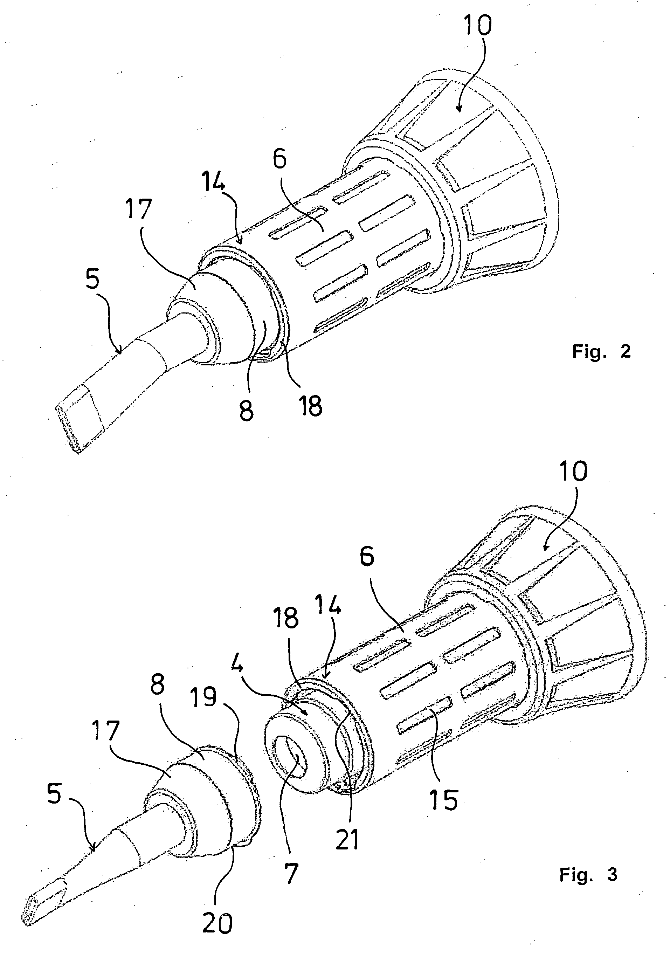

Die Figuren 2, 3 zeigen das Heißluftgerät 1 ohne das Gehäuse 2, schräg von vorne, wobei in Figur 2 entsprechend Figur 1, das Luftaustrittsrohr 4 mit aufgesetzter Heißluftdüse 5 dargestellt ist. Figur 3 zeigt das Heißluftgerät 1 entsprechend mit entfernter Heißluftdüse 5. Wie aus der Figur 3 ersichtlich ist, weist das Schutzrohr 6 an seinem vorderen Ende 14 einen unterbrochenen Ringbund 18 auf, dem ein ebenfalls unterbrochener Ringsteg 19 in Form von Laschen am Befestigungsflansch 8 der Heißluftdüse 5 zugeordnet ist. Die Laschen 19 stehen seitlich von dem Außenumfang 20 des Befestigungsflansches 8 radial nach außen ab. Dem gegenüber ist der unterbrochene Ringbund 18 an einem Innenumfang 21 des vorderen Endes 14 des Schutzrohrs 6 vorgesehen und erstreckt sich radial nach innen. Der unterbrochene Ringsteg 19 sowie der unterbrochene Ringbund 18 sind derart ausgebildet, dass ein axiales Einführen ineinander in einer bestimmten Stellung und eine anschließende Verriegelung durch Verdrehen der Heißluftdüse 5 gegenüber dem Schutzrohr 6 ermöglicht ist. Nach der Verriegelung kann die Heißluftdüse 5 durch Drehen des Schutzrohres 6 zu der Luftaustrittsöffnung 7 des Luftaustrittsrohrs 4 hin bewegt werden, um einen stirnseitigen Luftspalt zwischen dem konischen Flanschabschnitt 17 des Befestigungsflansches 8 und dem vorderen Ende 16 des Luftaustrittsrohrs 4 zu schließen.

Wie aus der Figur 1 noch ersichtlich, ist in einem Abstand zu dem unterbrochenen Ringbund 18 stromaufwärts in dem Schutzrohr 6 ein umlaufender Anschlag 22 vorgesehen, an dem sich der Ringsteg 19 der Heißluftdüse 5 beim Lösen der Heißluftdüse 5 von dem Luftaustrittsrohr 4 abstützen kann. Damit wird die Heißluftdüse 5 automatisch nach vorne in Strömungsrichtung gedrückt und von dem Luftaustrittsrohr 4 gelöst, sobald das Schutzrohr 6 von dem Gehäuse 2 weggedreht wird.

## Patentansprüche

1. Heißluftgerät (1) mit einem Gehäuse (2), an dem ein Luftaustrittsrohr (4) angeordnet ist, an dem mit einer Befestigungseinrichtung eine Heißluftdüse (5) mittels eines rohrartigen Befestigungsflansches (8) auswechselbar befestigbar ist, wobei das Luftaustrittsrohr (4) von einem Schutzrohr (6), das ebenfalls mit dem Gehäuse (2) verbunden ist, mit Abstand umgeben ist, **dadurch gekennzeichnet, dass** das Schutzrohr (6) als Befestigungseinrichtung ausgebildet ist.

2. Heißluftgerät nach Anspruch 1, **dadurch gekennzeichnet, dass** das Schutzrohr (6) an seinem hinteren Ende (10) mit dem Gehäuse (2), vorzugsweise mittels eines Umfangsgewindes (11) verschraubbar, lösbar verbunden ist.

3. Heißluftgerät nach Anspruch 1 oder 2, **dadurch gekennzeichnet, dass** die Heißluftdüse (5) mit dem vorderen Ende (14) des Schutzrohrs (6) lösbar verbunden ist.

4. Heißluftgerät nach Anspruch 3, **dadurch gekennzeichnet, dass** das Schutzrohr (6) einen Ringbund (18) an seinem Innenumfang (21) und der Befestigungsflansch (8) an seinem Schutzrohr (6) zugewandten Ende einen Ringsteg (19) am Außenumfang (20) aufweist, die miteinander in Eigriff bringbar sind.

5. Heißluftgerät nach Anspruch 4, **dadurch gekennzeichnet, dass** der Ringbund (18) und der Ringsteg (19) in Umfangsrichtung unterbrochen sind.

6. Heißluftgerät nach einem der vorangegangenen Ansprüche, **dadurch gekennzeichnet, dass** die Heißluftdüse (5) durch Drehen des Schutzrohrs (6) an das Luftaustrittsrohr (4) stirnseitig anpressbar ist.

7. Befestigungsflansch (8) für eine Heißluftdüse (5) zur Befestigung an einem Heißluftgerät (1) nach Anspruch 1 und/oder 2, **dadurch gekennzeichnet, dass** Befestigungsmittel (19) an dem dem Luftaustrittsrohr (4) zugewandten Ende des Befestigungsflansches (8) angeordnet sind, die mit dem Schutzrohr (6) des Heißluftgerätes (1) derart zusammenwirken können, dass die Heißluftdüse (5) durch Drehen des Schutzrohres (6) dichtend an das Luftaustrittsrohr (4) anpressbar und/oder von diesem lösbar ist.

8. Befestigungsflansch nach Anspruch 7, **dadurch gekennzeichnet, dass** die Befestigungsmittel (19) vorzugsweise am Außenumfang (20) des Befestigungsflansches (8) angeordnet sind.

9. Befestigungsflansch nach Anspruch 7 oder 8, **dadurch gekennzeichnet, dass** die Befestigungsmittel über den Umfang (20) des Befestigungsflansches (8) vorstehen.

10. Befestigungsflansch nach einem der vorangegangenen Ansprüche 7 bis 9, **dadurch gekennzeichnet, dass** der Befestigungsflansch (8) in das vordere Ende (14) des Schutzrohrs (6) einführbar und an dem Schutzrohr (6) festlegbar ist.

11. Heißluftdüse (5) zur Befestigung an einem Heißluftgerät (1) nach Anspruch 1 und/oder 2 mittels eines Befestigungsflansches (8) nach einem der Ansprüche 7 bis 10.
